# EUROPEAN PATENT SPECIFICATION

(11) **EP 3 084 260 B1**
(45) Date of publication and mention of the grant of the patent: **26.09.2018**
(21) Application number: 14833225.7
(22) Date of filing: 18.12.2014
(51) Int. Cl.: F16F 13/10

(54) **MOTOR SUPPORT FOR A MOTOR GROUP**
MOTORLAGER FÜR EINE MOTORGRUPPE
ÉLÉMENT DE SOUTIEN DE MOTEUR POUR GROUPE MOTEUR

(30) Priority: 20.12.2013 IT BS20130186
(43) Date of publication of application: 26.10.2016
(73) Proprietor: DTR VMS Italy S.r.l., 25050 Passirano, BRESCIA (IT)
(72) Inventor: GAZZOLI, Gianenrico, I-25050 Passirano-BRESCIA (IT); PASQUINI, Luigi, I-25050 Passirano-BRESCIA (IT)
(74) Representative: Gualeni, Nadia
(86) International application number: PCT/IB2014/067065
(87) International publication number: WO 2015/092731

(56) References cited:
- EP-A1- 1 074 761
- EP-A1- 2 381 127
- EP-A2- 1 336 771
- DE-A1-102012 202 312
- FR-A1- 2 916 503
- US-A1- 2012 267 184

## Description

This invention relates to a motor support suitable for supporting the motor group of a motor vehicle. Preferably said motor support comprises hydroelastic support means.

Specifically, in fact, the motor support is suitable to support the motor unit on the chassis of the motor vehicle.

Preferably, a motor group refers to a set of components that, among other things, comprise the motor and the gearbox group.

In the automotive industry, motor support solutions suitable to support motor groups on the chassis and damping their vibrations have already been known for some time.

Specifically, it is known how, in some phases of motion, for example in the presence of holes or bollards, the motor vehicle is subject to strong stresses, and consequently, in turn, also the motor group is subject to strong vibrations or strong stresses.

To increase the comfort of the motor vehicle, it is, therefore, necessary that the motor group be mounted on the chassis of the vehicle in such a way that the correct ' compromise between stiffness and damping is achieved. Said problem is solved by motor supports that are suitable to be fixed to the respective side rails of the chassis and are suitable to effectively damp the actions and movements of the motor group that is fixed to them by means of specific brackets. Examples of known motor supports are disclosed in documents EP2381127A1, DE 102012202312A1, EP1074761A1, FR2916503A1, US2012/267184A1 and EP1336771A2. Thereof document EP2 381 127 A1 is considered to represent the closest prior art, disclosing the preamble of claim 1.

In order to meet the above-mentioned needs, the construction and assembly of the motor supports are particularly complex.

The purpose of this invention is to provide a motor support that meets the above-mentioned needs while having a simpler construction and assembly.

This purpose is achieved by means of the motor support as claimed in claim 1, and the motor group assemblies referred to in claims 15 and 16, which comprise the motor support of the invention. The claims dependent on these identify variants of preferred embodiments providing further advantageous aspects.

The object of this invention is described below in detail, with the help of the attached tables, wherein:
- Figure 1 shows a perspective view of the motor support that is the object of this invention, in accordance with a preferred embodiment, mounted on a side rail of the chassis of a motor vehicle and containing a bracket portion of the motor group;
- Figure 2 shows an exploded perspective view of the motor support of Figure 1;
- Figures 3a and 3b show two cross-sections of the motor support of Figures 1 and 2 with, respectively, the hydroelastic bracket support means in a rest position and in a damping position;
- Figures 4a and 4b show two perspective views from below the motor support of Figures 1 and 2 with, respectively, the cover open and the cover closed;
- Figure 5 shows a perspective view of the motor support that is the object of this invention, in accordance with a further preferred embodiment, mounted on a side rail of the chassis of a motor vehicle and containing a motor bracket portion of the motor group;
- Figure 6 shows an exploded perspective view of the motor support of Figure 5;
- Figures 7a and 7b show two cross-sections of the motor support of Figures 5 and 6 with, respectively, the hydroelastic bracket support means in a rest position and in a damping position; and
- Figures 8a and 8b show two perspective views from below the motor support of Figures 5 and 6 with, respectively, the cover open and the cover closed.

The motor vehicles generally known have a frame on which a motor group is mounted. Often the motor vehicles are distinguished from one another, and have characteristics and behaviours different from each other depending on the positioning of the motor group on the chassis: there are motor vehicles with motor mounted on the forecarriage or others in which it is, instead, mounted to the rear; motor vehicles with motor group central or cantilevered; motor vehicles with motor group longitudinal or transverse.

Preferably said motor groups are mounted on said chassis by means of specific motor supports, suitable to support them on the chassis and to damp vibrations.

According to some embodiments, the chassis of said motor vehicles comprises two side rails 500 that extend longitudinally, for example, parallel to each other. In one embodiment with motor group mounted transversely to the motor vehicle, said motor group is mounted and supported by said side rails 500.

A motor group generally comprises an internal combustion or electric motor, a gearbox and other components. So, in some embodiments, the motor itself is on one side of the motor group' while the gearbox is on the other side; therefore, in the motor group, according to this, there are a motor side and a gearbox side.

Therefore, it should be noted that, depending on which is the motor group side, the engagement between the motor group and respective side rail may be different, for example, because of balancing of the weights or because of the different dimensions that the gearbox side has with respect to the motor side.

In order to obtain the engagement between the motor and side rails by means of the above-mentioned motor supports, the motor group comprises at least one motor bracket 900 suitable to engage the respective motor support.

In some embodiments, the motor group comprises at least two motor brackets 900, one for the gearbox side and the other for the motor side; in some embodiments, the two motor brackets 900 have different geometries.

In the above-mentioned tables, reference number 1 identifies, in its totality, a motor support according to the characteristics of this invention.

Specifically, the following passages describe two preferred embodiments of the motor support 1.

In other words, below a first embodiment of the motor support 1 is described, which is suitable to be used on the gearbox side of the motor group, and a second embodiment of the motor support 1 particularly suited to be used on the motor side of the motor group.

It should be noted that some features described below are common to both embodiments, while other features will be specifically described for each of the above; however, it should be noted that a feature described for one embodiment is not limited to such specific embodiment alone.

The motor support 1 of this invention is suitable to support a motor group, thus damping its vibrations; specifically, the motor support 1 is suitable to support the motor group on a chassis of a motor vehicle, and in particular, on a side rail 500 of the chassis.

According to a preferred embodiment of the motor support 1, in order to achieve said purpose, it is suitable to engage a bracket 900 of the motor group.

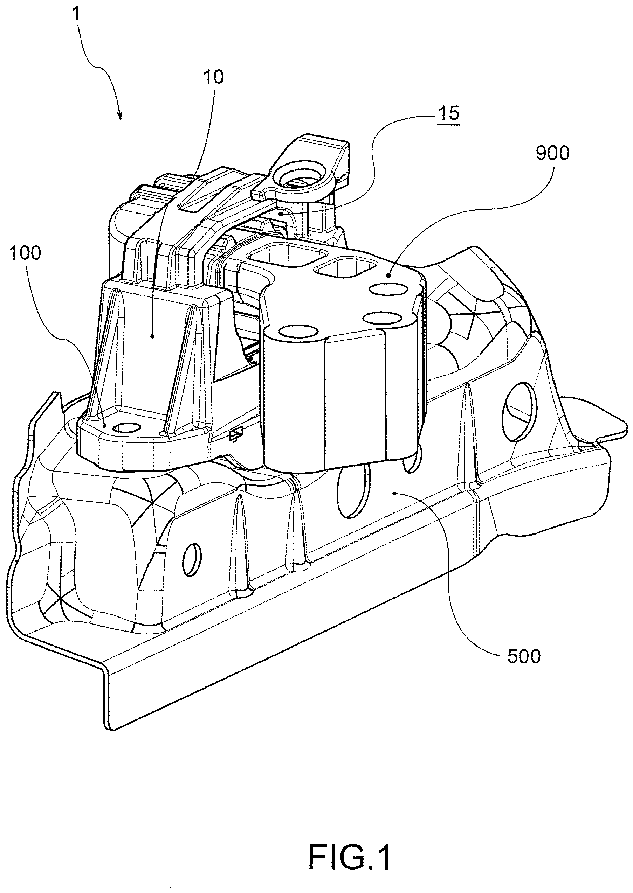

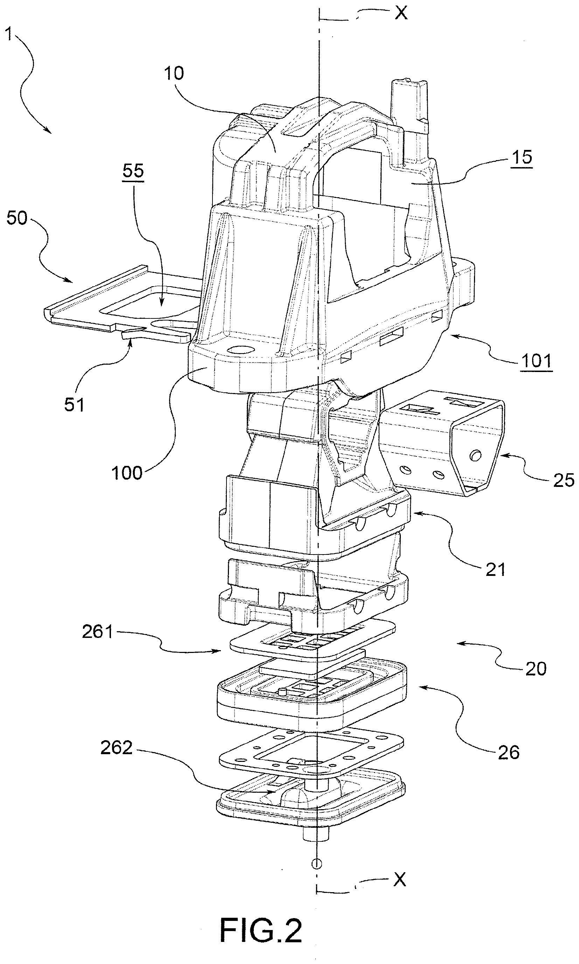

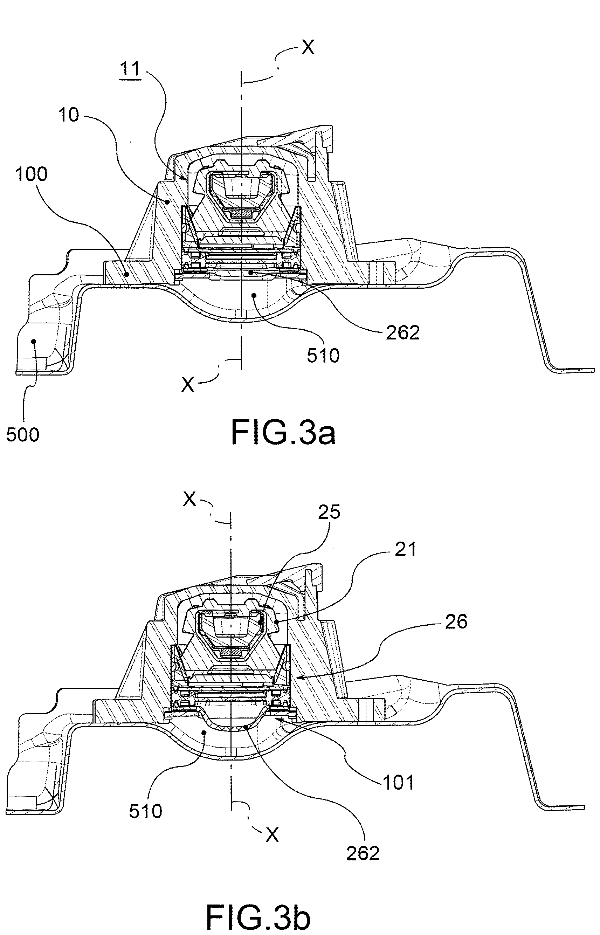

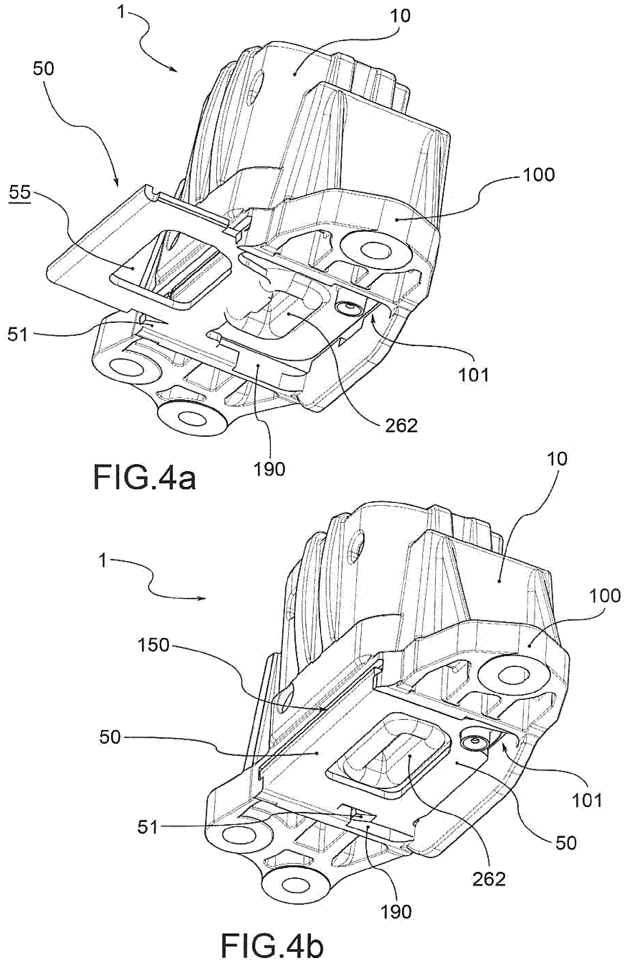

A motor support 1 is described below, which is suitable to engage the motor group on the gearbox side (Figures 1 to 4).

According to a preferred embodiment, the motor support 1 comprises a main body 10. Preferably, the main body 10 extends in height along an axis X-X, -starting from a base 100; said base 100 is suitable to be fixed to the side rail 500, for example, by means of suitable locking means such as screws or rivets.

According to a preferred embodiment, the main body 10 is hollow.

Preferably, the main body 10 has an inner cavity 11 that extends in height along the axis X-X.

Preferably, the base 100 has an entrance mouth 101, and the inner cavity 11 is accessible through the entrance mouth 101. In other words, the inner cavity 11 develops in height, inside the main body 10, starting from the base 100, and so, from the bottom upwards, when mounted on the respective side rail 500.

The main body 10 appears as a hollow shell, suitable to contain and protect components suitable to support the motor group.

The main body 10 is made in a single piece.

Preferably, the main body 10 is metal.

According to a preferred embodiment, the main body 10 has a side aperture 15 transverse to the axis X-X and with respect to the internal cavity 11, suitable to allow the insertion and housing of the bracket 900 inside it. Preferably, the side aperture 15 extends perpendicularly with respect to the axis X-X, preferably perpendicularly to the main body 10.

In some preferred embodiments, the side aperture 15 is formed on only one side of the main body 10, for example, facing the motor group, and allows the transverse housing of the bracket 900. While, in other embodiments, the side aperture passes through both sides of the main body, allowing the transverse housing of the bracket 900 by extending beyond the edge of both sides of the 1.

According to a preferred embodiment, the motor support 1 also comprises hydroelastic bracket support means 20 suitable to engage the bracket 900 to support it and to dampen the movements induced in it by the action of the motor group.

Preferably, the hydroelastic bracket support means 20 are housed inside the cavity 11 of the main body 10. Preferably, the hydroelastic bracket support means 20 are inserted as "a pack", or stacked, inside the cavity 11.

According to a preferred embodiment, the hydroelastic bracket support means 20 are insertable into the inner cavity 11 through the entrance mouth 101 and are suitable to engage the bracket 900 housed through the side aperture 15.

Preferably the hydroelastic bracket support means 20 comprise a bracket housing element 25 and the housing and engagement with the bracket 900. In other words, the bracket housing element 25 is suitable to provide accommodation for a portion of the bracket 900. Preferably, the bracket housing element 25 extends along the side aperture 15, from one side of it to the other. Preferably, the bracket housing element 25 is metal.

Furthermore, the hydroelastic bracket support means 20 comprise an elastically yielding support body 21. Preferably, the support body 21 is rubber.

Preferably, the support body 21 extends, in height, along the axis X-X; preferably the support body 21 has dimensions such that it is suitable to engage the walls of the inner cavity 11, for example, in such a way as to discharge on the main body 10 the actions that act on it and, for example, so as to be elastically preloaded.

In accordance with a preferred embodiment, the support body 21 extends around the bracket housing element 25.

In other words, the support body 21, upon the action of the bracket 900, through the bracket housing element 25, is changed in its shape, thus going to engage the walls of the cavity 11.

In a preferred embodiment, the hydroelastic bracket support means 20 also comprise hydroelastic damping means 26 suitable to dampen the actions of the bracket 900 on the support body 21 through the presence of a damping fluid.

Preferably, said hydroelastic damping means 26 are positioned near the entrance mouth 101. In other words, the hydroelastic damping means 26 are positioned below the motor support 1, near the side rail 500.

In accordance with a preferred embodiment the hydroelastic damping means 26 comprise at least one component made of an elastically yielding material, for example rubber, so that an action of the bracket 900 corresponds to a modification of the shape of the component made of an elastically yielding material; in other words an action of the bracket 900 and a modification of the shape of the component made of an elastically yielding material corresponds to an action on the liquid contained in the hydroelastic damping means 26 in such a way that the actions in play are discharged on the damping liquid.

According to a preferred embodiment, the hydroelastic damping means 26 comprise a damping circuit 261 containing a damping liquid.

Preferably, the damping circuit 261 comprises a membrane 262 made of elastically yielding material so that upon an action of the bracket 900 on the hydroelastic bracket support means 20, the membrane changes its shape receiving inside it a predefined quantity of damping liquid as a result of said action.

According to a preferred embodiment, the membrane 262 is located near the entrance mouth 101.

Preferably, the membrane 262, in the absence of an action of the bracket 900 is suitable to lie in a rest position, while under action of the bracket 900, the membrane 262 changes its shape, assuming a damping position wherein it is, instead, suitable to contain a predetermined quantity of damping liquid. In other words, in the damping position, the membrane 262 is inflated by the action of damping liquid.

According to a preferred embodiment, the membrane 262 extends superficially on the entrance mouth 101 and is subject to the action of the support body 21 in a direct manner.

In accordance with a preferred embodiment, the motor support 1 further comprises a cover 50 suitable to close the entrance mouth 101 and hold the bracket support means 20 in the inner cavity 11.

According to the invention, the cover 50 holds the hydroelastic bracket support means 20 in a pack in the inner cavity 11.

The cover 50 is elastically loading the hydroelastic bracket support means 20 and, preferably, is suitable for elastically loading the support body 21.

According to a preferred embodiment, the cover 50 comprises at least one locking tooth 51 suitable for closing the entrance mouth 101, snap-engaging the main body 10.

Preferably, the main body 10 comprises a slot 150 specially formed to engage with the locking tooth 51.

According to a preferred embodiment, the cover 50 is suitable to close the entrance mouth 101 by inserting itself into the main body 10 "like a drawer", for example through a slot 150. The slot is therefore specifically formed on the main body 10, for example, transverse to the axis X-X.

Preferably, the cover 50 inserted transversely in the main body 10 closes the hydroelastic bracket support means like a "guillotine", or "gate", keeping the pack inside the inner cavity 11.

Preferably, in addition, the entrance mouth 101 comprises retention grooves 190 for holding the cover 50 along the axis X-X of the cover 50.

In some preferred embodiments, in addition, the locking tooth 51 engages the retention groove 190, on which is formed, for example, the slot 150 specifically shaped to engage with the locking tooth 51.

Preferably, two retention grooves 190, radially opposed with respect to the axis X-X are derived in the inner cavity 11.

According to a preferred embodiment, a membrane aperture 55 is derived on the cover 50 suitable to allow the passage of a portion of the membrane 262, in particular when this changes shape. Preferably, the membrane aperture 55 is derived in correspondence to the axis X-X. In other words, the membrane 262 lies in a rest position, perpendicularly to the axis X-X, while when it is in a damping position, it is inflated along the axis X-X.

In other words, facing the entrance mouth 101, the side rail 500 has a damping chamber 510, which is a chamber in which the membrane 262 can change its shape under the action of the bracket 900.

According to a preferred embodiment, the main body 10 has, inside the inner cavity 11, slots 155 suitable to be snap-engaged with the cover 50. For example, the main body 10 comprises two slots 155 at opposite sides of the inner cavity 11; preferably, the cover 50 comprises two locking teeth 51 placed on its opposite sides.

Preferably, a motor group assembly positioned transversely to two side rails of the chassis of an automobile is also an object of this invention; according to a preferred embodiment, said motor group assembly includes a motor group and a motor support 1 on the gearbox side.

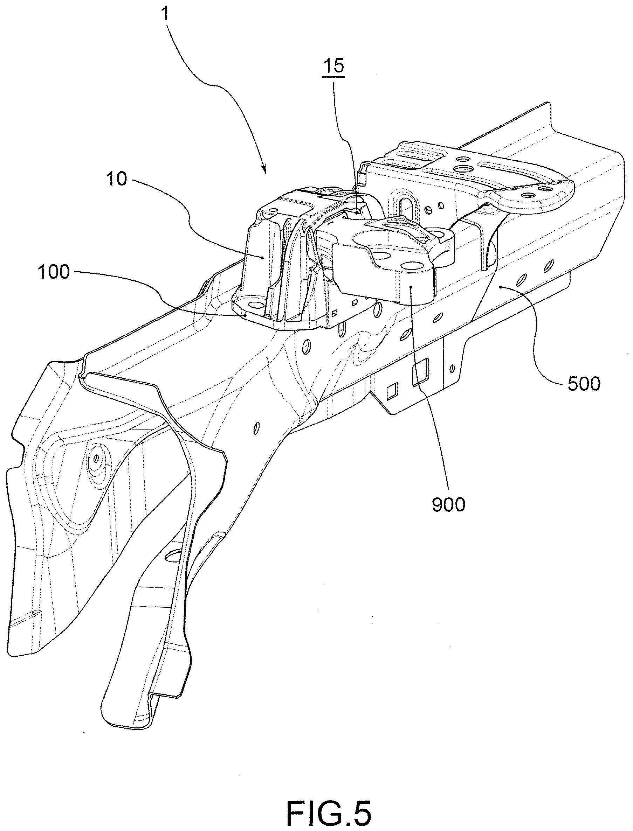

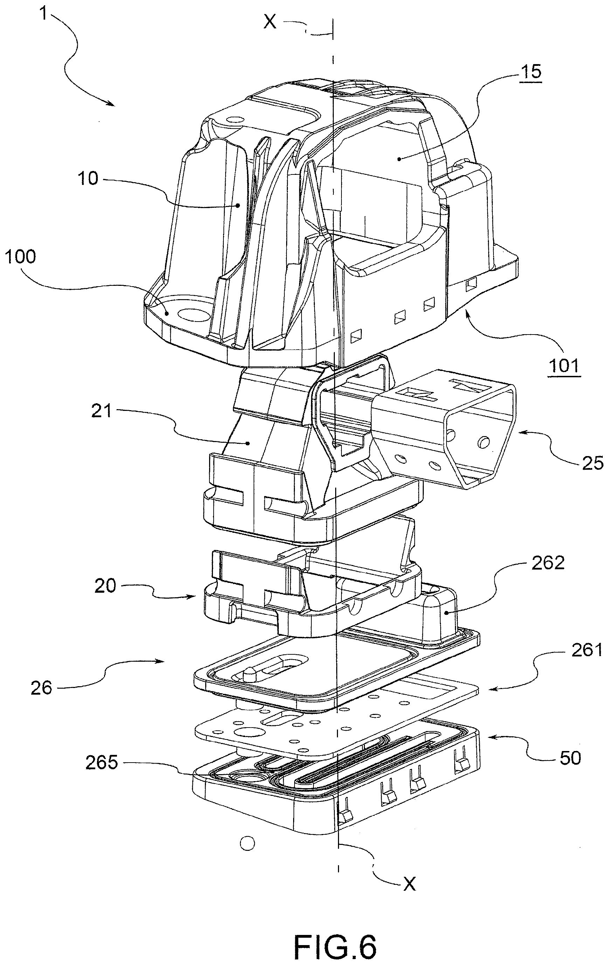

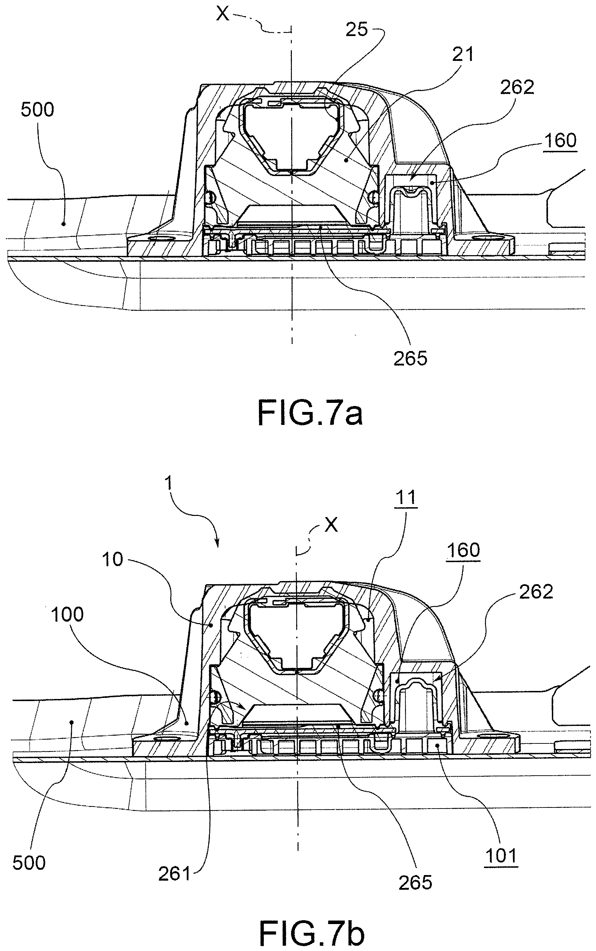

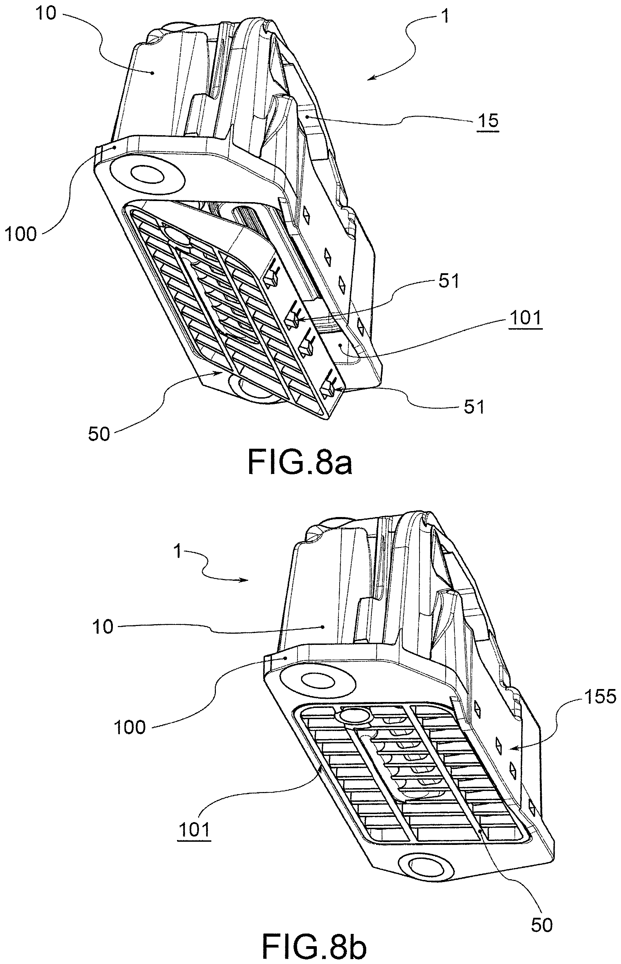

In addition, the other embodiment of the motor support 1 suitable to be engaged on the motor side of the motor group (Figures 5 to 8) is illustrated below.

According to a preferred embodiment, the motor support 1 on the motor side differs from the motor support 1 on the gearbox side, in particular, but not only, in the damping system of the actions of the bracket 900.

In other words, the motor support 1 on the motor side appears to have hydroelastic damping means 26 with respect to the motor support 1 on the gearbox side described above: in fact, the membrane 261 is not engaged in a direct manner by the support body 21, but is engaged by it in an indirect manner.

In other words, in a preferred embodiment, the hydroelastic damping means 26 comprise a damping circuit 261 containing damping liquid with a different shape than that described previously: in fact, the damping circuit 261 comprises a damping duct 265 in fluidic communication with said membrane 262. Preferably the action of the support body 21 due to the bracket 900 acts on the membrane 162 in an indirect manner. In other words, the damping duct 265 is engaged by the supporting body 21 so that the action of the bracket 900 on the support body 21 engages the damping duct 265 and the liquid contained therein in manner such that the damping liquid flows into said membrane 262 changing the shape and, in particular, inflating it. In the absence of an action of the bracket 900 on the support body 21 the damping duct 265 is not subject to any actions and therefore the membrane lies in the rest position; when, instead, there is an action of the bracket 900 on the support body 21, the damping duct 265 is subject to such action, in particular, it is crushed, and the damping liquid inside flows into the membrane 262 changing its shape, i.e., inflating it.

According to a preferred embodiment, the damping circuit 265 extends superficially on the entrance mouth 101. Preferably, the damping circuit 265 extends in a coil.

Preferably, the damping circuit 265 is made of rubber.

According to a preferred embodiment, a damping chamber 160 in which the membrane 262 inflates is derived in the main body 10, preferably, the damping chamber extends in height from the base 101 , for example, parallel to the inner cavity 11.

According to a preferred embodiment, the cover 50 is suitable to close the entrance mouth 101 by being inserted in the cavity 11; preferably, the cover 50 is inserted from the bottom by working on the entrance mouth 101 and, in particular, on the walls that delimit it; preferably, the cover 50 is rotatable in its insertion phase: in fact, it is inserted in the entrance mouth 101 by inserting a first edge in it and then by rotating the whole cover in its entirety around said first edge.

In accordance with said preferred embodiment, the cover 50 comprises at least one locking tooth 51 for snap-locking the cover 50 on the main body 10, and in particular on the entrance mouth 101; preferably the locking tooth 51 is derived on the second edge, i.e., the edge that, following the rotation, enters inside (after the first edge the inner cavity 11.

According to a preferred embodiment the cover 50 comprises a plurality of locking teeth 51 along its extension.

According to a preferred embodiment, near the entrance mouth 101, on the wall that laterally delimits it, there is at least one slot 155 suitable to be snap-engaged by the respective locking tooth 51.

According to a preferred embodiment, the damping duct 265 is formed on the cover 50.

In other words, the damping duct 265 is located on the cover 50, for example, at least partly glued on it.

Preferably, a motor group assembly positioned transversely to two side rails that are part of the chassis of an automobile is also an object of this invention; according to a preferred embodiment, said motor group assembly includes a motor group and a motor support 1 oh the gearbox side; according to a preferred embodiment, said motor group assembly includes a motor group and a motor support 1 on the motor side.

Innovatively, the motor support and motor group assembly that are the objects of this invention are suitable to solve the problems typical of the solutions of the known art. Advantageously, the engine support that is the object of this invention is able to ensure the correct rigidity and correct damping of the actions related to the motor group.

Advantageously, the motor support that is the object of this invention is simple to construct and assemble.

A further advantageous aspect of the motor support lies in the fact of being extremely economical in its construction and assembly. A further advantageous aspect also lies in the immediacy of the operations of inserting the cover.

A still further advantageous aspect of the motor support lies in the fact of being easy to mount on the motor vehicle.

Advantageously, the number of components of the motor support that is the object of this invention is minimized compared to the number of components of the motor supports typical of the prior art.

Moreover, advantageously, embodiments of the motor support are foreseeable in accordance with this invention that are specifically suitable to be placed on the motor side or on the gearbox side of the motor group, where these embodiments are different from each other, but not distorted in their inventive concept.

Advantageously, the cover is multifunctional obtaining the locking of the hydroelastic bracket support means along the X-X and, at the same time, maintaining them inside the inner cavity over time.

Those skilled in the art could apply techniques or element variations with other equivalent functions to the embodiments of the motor support that is the object of this invention in order to satisfy specific needs. Even these techniques are within the scope of protection, as defined by the following claims.

Furthermore, a technician skilled in the art could insert some devices typical of the motor support on the gearbox side to the motor support on the motor side and vice versa. Even these variants are within the scope of protection, as defined by the following claims.

Moreover, each of the variants described as belonging to a possible embodiment can be realized independently of the other variants described.

## Claims

1. Motor support (1) suitable for supporting, damping the vibrations thereof, a motor group to a side rail (500) of a chassis of a motor vehicle, engaging a bracket (900) of said motor group, comprising:
- a main body (10) which extends in height along an axis (X-X), starting from a base (100), presenting an entrance mouth (101), suitable for being attached to the side rail (500), said main body (10) being a hollow shell made in a single piece to contain and protect hydroelastic bracket support means (20), where the main body (10) presents:
i) an inner cavity (11), accessible from said entrance mouth (101), which extends in height along the axis (X-X) inside the main body (10) starting from the base (100);
ii) a side aperture (15), transversal in relation to the axis (X-X) and in relation to the inner cavity (11), suitable to permit the housing of the bracket (900);
- hydroelastic bracket support means (20) housed inside the inner cavity (11), insertable therein through the entrance mouth (101), suitable to engage the bracket (900) housed though the side aperture (15) to support it and to dampen the movements thereof;
the motor support (1) further comprises:
- a cover (50) suitable to close, at least partially, the entrance mouth (101) and to retain the hydroelastic bracket support means (20) in the inner cavity (11), said cover (50) holding the hydroelastic bracket support means (20) stacked inside the inner cavity (11) of the main body (10), **characterized in that** said cover is elastically loading said hydroelastic bracket support means (20).

2. Motor support (1) according to claim 1, wherein the main body (10) is composed of metal.

3. Motor support (1) according to any of the previous claims, wherein the hydroelastic bracket support means (20) comprise a bracket housing element (25) for housing and engaging with said bracket (900), an elastically yielding support body (21), which extends along the axis (X-X), in such a way as to engage the walls of the inner cavity (11), and is suitable to contain said bracket housing element (25), hydroelastic damping means (26) placed near the entrance mouth (101) and suitable to dampen the actions of the bracket on the support body (21) by means of the presence of a damping liquid.

4. Motor support (1) according to claim 3, wherein the hydroelastic damping means (26) comprise at least one component in an elastically yielding material, preferably in rubber, in such a way that an action of the bracket (900) corresponds to a change in the shape of said component.

5. Motor support (1) according to claim 3 or 4, wherein the hydroelastic damping means (26) comprise a damping circuit (261) containing a damping liquid, wherein said damping circuit (261) comprises a membrane (262) in elastically yielding material, in such a way that upon action of the bracket (900) on the hydroelastic bracket support means (20) said membrane (262) changes its shape receiving within it a predefined quantity of damping liquid as a result of said action.

6. Motor support (1) according to claim 5, wherein said membrane (262) is localised near the entrance mouth (101) and in the absence of an action of the bracket (900) lies in a rest position, while under the action of the bracket (900) it changes its shape into a damping position in which it is suitable to contain a predefined quantity of damping liquid.

7. Motor support (1) according to claims 5 or 6, wherein the membrane (262) extends superficially on the entrance mouth (101), due to the direct action of the support body (21) .

8. Motor support (1) according to claims 5 or 6, wherein the damping circuit (261) comprises a damping duct (265) in fluidic communication with said membrane (262) in such a way that the action of the bracket (900) on the support body (21) engages the damping duct (265) so that the damping liquid in the circuit flows in said membrane (262), changing its shape.

9. Motor support (1) according to claim 8, wherein said damping circuit (265) extends, for example in a coil, superficially on the entrance mouth (101).

10. Motor support (1) according to any of the previous claims, wherein the cover (50) comprises at least one locking tooth (51) suitable to close the entrance mouth (101) by snap-engaging the main body (10), for example in a specially shaped slot (155) to engage with said locking tooth (51).

11. Motor support (1) according to claim 10, and any of the claims 8 or 9, wherein the damping duct (265) is made on the cover (50).

12. Motor support (1) according to claim 7, wherein a membrane aperture (55) is made on the cover (50) suitable for permitting the passage of a portion of the membrane (261), in particular in the moment in which it changes shape.

13. Motor support (1) according to claim 7 or to claim 12, wherein a slot (150) is provided on the main body (10) transversal in relation to the axis (X-X) which the cover (50) is insertable in.

14. Motor support (1) according to claim 13, wherein the entrance mouth (101) comprises retention grooves (190) for the retention along the axis (X-X) of the cover (50).

15. Motor group assembly positioned transversally to two side rails (500) forming part of the chassis of a motor vehicle comprising a motor group and a motor support (1) according to any of the claims from 12 to 14 , wherein said motor support (1) is positioned on the gearbox side of the motor group.

16. Motor group assembly positioned transversally to two side rails (500) forming part of the chassis of a motor vehicle comprising a motor group and a motor support (1) according to claims 11, wherein said motor support (1) is positioned on the motor side of the motor group.

## Patentansprüche

1. Motorlager (1), das zum Lagern einer Motorgruppe an einer Seitenschiene (500) eines Chassis eines Motorfahrzeugs, die an einer Klammer (900) der Motorgruppe angreift, geeignet ist und deren Schwingung dämpft, das umfasst:
- einen Hauptkörper (10), der sich beginnend von einer Basis (100), die eine Eintrittsmündung (101) bietet, in der Höhe entlang einer Achse (X-X) erstreckt, die geeignet ist, an der Seitenschiene (500) befestigt zu werden, wobei der Hauptkörper (10) eine hohle Schale ist, die in einem einzigen Stück hergestellt ist, um hydroelastische Klammerhaltemittel (20) zu enthalten und zu schützen, wobei der Hauptkörper (10) bietet:
i) einen inneren Hohlraum (11), der von der Eintrittsmündung (101), zugänglich ist, der sich beginnend von der Basis (100) in der Höhe entlang der Achse (X-X) im Inneren des Hauptkörpers (10) erstreckt;
ii) eine seitliche Öffnung (15), die in Bezug auf die Achse (X-X) und in Bezug auf den Innenhohlraum (11) transversal ist, die geeignet ist, die Aufnahme der Klammer (900) zuzulassen;
- hydroelastische Klammerhaltemittel (20), die im Inneren des Innenhohlraums (11) aufgenommen sind, die durch die Eintrittsmündung (101) in diese einsetzbar sind, die geeignet sind, an der Klammer (900) anzugreifen, die durch die Seitenöffnung (15) aufgenommen ist, um sie zu lagern und ihre Bewegungen zu dämpfen;
wobei das Motorlager (1) ferner umfasst:
- eine Abdeckung (50), die geeignet ist, die Eintrittsmündung (101) wenigstens teilweise zu schließen und die hydroelastischen Klammerhaltemittel (20) in dem Innenhohlraum (11) festzuhalten, wobei die Abdeckung (50) die hydroelastischen Klammerhaltemittel (20) im Inneren des Innenhohlraums (11) des Hauptkörpers (10) gestapelt hält, **dadurch gekennzeichnet, dass** die Abdeckung die hydroelastischen Klammerhaltemittel (20) elastisch spannt.

2. Motorlager (1) nach Anspruch 1, wobei der Hauptkörper (10) aus Metall besteht.

3. Motorlager (1) nach einem der vorhergehenden Ansprüche, wobei die hydroelastischen Klammerhaltemittel (20) umfassen: ein Klammergehäuseelement (25) zum Aufnehmen der Klammer (900) und Eingreifen mit dieser, einen elastisch nachgebenden Lagerkörper (21), der sich entlang der Achse (X-X) in einer derartigen Weise erstreckt, dass er an den Wänden des Innenhohlraums (11) angreift und der geeignet ist, das Klammergehäuseelement (25) zu enthalten, hydroelastische Dämpfungsmittel (26), die in der Nähe der Eintrittsmündung (101) angeordnet sind und geeignet sind, um die Wirkungen der Klammer auf den Lagerkörper (21) mittels des Vorhandenseins einer Dämpfungsflüssigkeit zu dämpfen.

4. Motorlager (1) nach Anspruch 3, wobei die hydroelastischen Dämpfungsmittel (26) wenigstens eine Komponente in einem elastisch nachgiebigen Material, vorzugsweise in Gummi, in einer derartigen Weise umfassen, dass eine Wirkung der Klammer (900) einer Änderung in der Form der Komponente entspricht.

5. Motorlager (1) nach Anspruch 3 oder 4, wobei die hydroelastischen Dämpfungsmittel (26) einen Dämpfungskreis (261) umfassen, der eine Dämpfungsflüssigkeit enthält, wobei der Dämpfungskreis (261) eine Membran (262) in elastisch nachgiebigem Material in einer derartigen Weise umfasst, dass die Membran (262) bei der Wirkung der Klammer (900) auf die hydroelastischen Klammerhaltemittel (20) ihre Form ändert, wobei sie als ein Ergebnis dieser Wirkung eine vordefinierte Menge der Dämpfungsflüssigkeit in sich aufnimmt.

6. Motorlager (1) nach Anspruch 5, wobei die Membran (262) nahe der Eintrittsmündung (101) lokalisiert ist und bei nicht vorhandener Wirkung der Klammer (900) in einer Ruheposition liegt, während sie ihre Form unter der Wirkung der Klammer (900) in eine Dämpfungsposition wechselt, in der sie geeignet ist, eine vordefinierte Menge der Dämpfungsflüssigkeit zu enthalten.

7. Motorlager (1) nach den Ansprüchen 5 oder 6, wobei die Membran (262) sich aufgrund der direkten Wirkung des Lagerkörpers (21) oberflächlich auf der Eintrittsmündung (101) erstreckt.

8. Motorlager (1) nach den Ansprüchen 5 oder 6, wobei der Dämpfungskreis (261) einen Dämpfungskanal (265) in einer Fluidverbindung mit der Membran (262) in einer derartigen Weise umfasst, dass die Wirkung der Klammer (900) auf den Lagerkörper (21) derart an dem Dämpfungskanal (265) angreift, dass die Dämpfungsflüssigkeit in dem Kreis in die Membran (262) fließt und ihre Form ändert.

9. Motorlager (1) nach Anspruch 8, wobei der Dämpfungskreis (265) sich zum Beispiel in einer Spule oberflächlich auf der Eintrittsmündung (101) erstreckt.

10. Motorlager (1) nach einem der vorhergehenden Ansprüche, wobei die Abdeckung (50) wenigstens einen Sperrzahn (51) umfasst, der geeignet ist, um die Eintrittsmündung (101) durch Einrasten des Hauptkörpers (10) zum Beispiel in einem speziell geformten Schlitz (155) zum Eingreifen mit dem Sperrzahn (51) zu schließen.

11. Motorlager (1) nach Anspruch 10 und jedem der Ansprüche 8 und 9, wobei der Dämpfungskanal (265) auf der Abdeckung (50) hergestellt ist.

12. Motorlager (1) nach Anspruch 7, wobei eine Membranöffnung (55) auf der Abdeckung (50) hergestellt ist, die geeignet ist, insbesondere in dem Moment, in dem sie ihre Form ändert, den Durchgang eines Abschnitts der Membran (261) zuzulassen.

13. Motorlager (1) nach Anspruch 7 oder Anspruch 12, wobei ein Schlitz (150) auf dem Hauptkörper (10) in Bezug auf die Achse (X-X) transversal bereitgestellt ist, in den die Abdeckung (50) einsetzbar ist.

14. Motorlager (1) nach Anspruch 13, wobei die Eintrittsmündung (101) Haltenuten (190) zum Halten der Achse (X-X-) der Abdeckung (50) umfasst.

15. Motorgruppenanordnung, die transversal zu zwei Seitenschienen (500) positioniert ist, die einen Teil des Chassis eines Motorfahrzeugs bilden, das eine Motorgruppe und ein Motorlager (1) nach einem der Ansprüche 12 bis 14 umfasst, wobei das Motorlager (1) auf der Getriebeseite der Motorgruppe positioniert ist.

16. Motorgruppenanordnung, die transversal zu zwei Seitenschienen (500) positioniert ist, die einen Teil des Chassis eines Motorfahrzeugs bilden, das eine Motorgruppe und ein Motorlager (1) nach Anspruch 11 umfasst, wobei das Motorlager (1) auf der Motorseite der Motorgruppe positioniert ist.

## Revendications

1. Élément de soutien de moteur (1) adapté pour soutenir, en amortissant les vibrations de celui-ci, un groupe moteur sur un rail latéral (500) d'un châssis d'un véhicule à moteur, en mettant en prise un support (900) dudit groupe moteur, comprenant :
- un corps principal (10) qui s'étend dans une hauteur le long d'un axe (X-X), en commençant à partir d'une base (100), présentant une embouchure d'entrée (101), adapté pour être fixé au rail latéral (500), ledit corps principal (10) étant une coque creuse faite d'un seul tenant pour contenir et protéger un moyen de soutien de support hydro élastique (20), dans lequel le corps principal (10) présente :
i) une cavité interne (11), accessible depuis ladite embouchure d'entrée (101), qui s'étend dans une hauteur le long de l'axe (X-X) à l'intérieur du corps principal (10) en commençant à partir de la base (100) ;
ii) une ouverture latérale (15), transversale en relation par rapport à l'axe (X-X) et en relation avec la cavité interne (11), adaptée pour permettre le logement du support (900) ;
- un moyen de soutien de support hydro élastique (20) logé à l'intérieur de la cavité interne (11), pouvant être inséré dans celle-ci à travers l'embouchure d'entrée (101), adapté pour mettre en prise le support (900) logé à travers l'ouverture latérale (15) afin de le soutenir et amortir les mouvements de celui-ci ;
l'élément de soutien de moteur (1) comprend en outre :
- un couvercle (50) adapté pour fermer, au moins partiellement, l'embouchure d'entrée (101) et pour retenir le moyen de soutien de support hydro élastique (20) dans la cavité interne (11), ledit couvercle (50) maintenant le moyen de soutien de support hydro élastique (20) empilé à l'intérieur de la cavité interne (11) du corps principal (10), **caractérisé en ce que** ledit couvercle charge de manière élastique ledit moyen de soutien de support hydro élastique (20).

2. Élément de soutien de moteur (1) selon la revendication 1, dans lequel le corps principal (10) est composé de métal.

3. Élément de soutien de moteur (1) selon l'une quelconque des revendications précédentes, dans lequel le moyen de soutien de support hydro élastique (20) comprend un élément de logement de support (25) pour loger et mettre en prise avec ledit support (900), un corps de soutien à rendu élastique (21), qui s'étend le long de l'axe (X-X), de sorte à mettre en prise les parois de la cavité interne (11), et est adapté pour contenir ledit élément de logement de support (25), un moyen d'amortissement hydro élastique (26) placé à proximité de l'embouchure d'entrée (101) et adapté pour amortir les actions du support sur le corps de soutien (21) au moyen de la présence d'un liquide d'amortissement.

4. Élément de soutien de moteur (1) selon la revendication 3, dans lequel le moyen d'amortissement hydro élastique (26) comprend au moins un composant dans un matériau à rendu élastique, de préférence en caoutchouc, de sorte qu'une action du support (900) correspond à un changement de la forme dudit composant.

5. Élément de soutien de moteur (1) selon la revendication 3 ou 4, dans lequel le moyen d'amortissement hydro élastique (26) comprend un circuit d'amortissement (261) contenant un liquide d'amortissement, dans lequel ledit circuit d'amortissement (261) comprend une membrane (262) dans un matériau à rendu élastique, de sorte que lors d'une action du support (900) sur le moyen de soutien de support hydro-élastique (20) ladite membrane (262) change sa forme en recevant à l'intérieur de celle-ci une quantité prédéfinie de liquide d'amortissement en résultat de ladite action.

6. Élément de soutien de moteur (1) selon la revendication 5, dans lequel ladite membrane (262) est localisée à proximité de l'embouchure d'entrée (101) et en l'absence d'une action du support (900) repose dans une position de repos, tandis que sous l'action du support (900) elle change sa forme en une position d'amortissement dans laquelle elle est adaptée pour contenir une quantité prédéfinie de liquide d'amortissement.

7. Élément de soutien de moteur (1) selon les revendications 5 ou 6, dans lequel la membrane (262) s'étend superficiellement sur l'embouchure d'entrée (101), en raison de l'action directe sur le corps de soutien (21).

8. Élément de soutien de moteur (1) selon la revendications 5 ou 6, dans lequel le circuit d'amortissement (261) comprend une conduite d'amortissement (265) en communication fluidique avec ladite membrane (262) de sorte que l'action du support (900) sur le corps de soutien (21) met en prise la conduite d'amortissement (265) si bien que le liquide d'amortissement dans le circuit s'écoule dans ladite membrane (262), changeant sa forme.

9. Élément de soutien de moteur (1) selon la revendication 8, dans lequel ledit circuit d'amortissement (265) s'étend, par exemple dans un enroulement, superficiellement sur l'embouchure d'entrée (101).

10. Élément de soutien de moteur (1) selon l'une quelconque des revendications précédentes, dans lequel le couvercle (50) comprend au moins une dent de blocage (51) adaptée pour fermer l'embouchure d'entrée (101) en mettant en prise par encliquettement le corps principal (10), par exemple dans une fente formée spécialement (155) pour se mettre en prise avec ladite dent de blocage (51).

11. Élément de soutien de moteur (1) selon la revendication 10, et l'une quelconque des revendications 8 ou 9, dans lequel la conduite d'amortissement (265) est faite sur le couvercle (50).

12. Élément de soutien de moteur (1) selon la revendication 7, dans lequel une ouverture de membrane (55) est faite sur le couvercle (50) adaptée pour permettre le passage d'une portion de la membrane (261), en particulier au moment où elle change de forme.

13. Élément de soutien de moteur (1) selon la revendication 7 ou la revendication 12, dans lequel une fente (150) est prévue sur le corps principal (10) transversale en relation par rapport à l'axe (X-X) dans laquelle le couvercle (50) peut être inséré.

14. Élément de soutien de moteur (1) selon la revendication 13, dans lequel l'embouchure d'entrée (101) comprend des rainures de retenue (190) pour la retenue le long de l'axe (X-X) du couvercle (50).

15. Ensemble groupe moteur positionné transversalement par rapport à deux rails latéraux (500) faisant partie du châssis d'un véhicule à moteur comprenant un groupe moteur et un élément de soutien de moteur (1) selon l'une quelconque des revendications 12 à 14, dans lequel ledit élément de soutien de moteur (1) est positionné sur le côté boîte de vitesses du groupe moteur.

16. Ensemble groupe moteur positionné transversalement par rapport à deux rails latéraux (500) faisant partie du châssis d'un véhicule à moteur comprenant un groupe moteur et un élément de soutien de moteur (1) selon la revendication 11, dans lequel ledit élément de soutien de moteur (1) est positionné sur le côté moteur du groupe moteur.
